Europäisches Patentamt

European Patent Office

Office européen des brevets

(19)

(11) Veröffentlichungsnummer: **0 095 095**

**A1**

(12) **EUROPÄISCHE PATENTANMELDUNG**

(21) Anmeldenummer: **83104677.6**

(22) Anmeldetag: **11.05.83**

(51) Int. Cl.³: **G 01 G 13/08**
**G 01 G 13/02**

(30) Priorität: **21.05.82 CH 3149/82**
**30.11.82 DE 3244338**

(43) Veröffentlichungstag der Anmeldung:
**30.11.83 Patentblatt 83/48**

(84) Benannte Vertragsstaaten:
**FR GB IT NL**

(71) Anmelder: **Gebrüder Bühler AG**

**CH-9240 Uzwil(CH)**

(72) Erfinder: **Gmuer, Bruno**
**Boppartstrasse 32**
**CH-9014 St. Gallen(CH)**

(74) Vertreter: **Geyer, Werner, Dr.-Ing. et al,**
**Patentanwälte GEYER, HAGEMANN & PARTNER**
**Postfach 860329 Ismaninger Strasse 108**
**D-8000 München 86(DE)**

(54) Verfahren zum Verwägen von Schüttgut und Verwägevorrichtung.

(57) Bei einem Verfahren zum Verwägen von Schüttgut, bei dem das Schüttgut einem Waagebehälter (1) über ein Dosierband (4) zugeführt wird, wird die Zubringmenge des Dosierbandes (4) in einen Hauptdosierstrom sowie einen Feindosierstrom aufgeteilt und der Hauptdosierstrom unabhängig vom Feindosierstrom in einem Auffangbehälter (13) eingeleitet, in dem das entsprechende Schüttgut gespeichert und von dem aus es beim nächsten Wägevorgang dem Hauptdosierstrom wieder zugeführt werden kann.

Bei einer Verwägevorrichtung, die ein Dosierband (4), eine von der Waage steuerbare Absperreinrichtung sowie einen Waagenbehälter (1) aufweist, wird im Bereich des Abwurfes des Dosierbandes (4) eine verschließbare Auffangeinrichtung (13) für den Hauptdosierstrom sowie eine Einrichtung zur Bildung eines steuerbaren, vom Hauptdosierstrom trennbaren Feindosierstromes angeordnet.

FIG. 1

0095095

Titel:  Verfahren zum Verwägen von Schüttgut und Verwäge-
        vorrichtung


## Technisches Gebiet

Die Erfindung bezieht sich auf ein Verfahren zum Verwägen von Schüttgut, wobei das Schüttgut einem Waagenbehälter über ein Dosierband zugeführt wird. Die Erfindung bezieht sich weiterhin auf eine Verwägevorrichtung mit einem Dosierband, einer von einer Waage steuerbaren Absperreinrichtung sowie einem Waagenbehälter.


## Zugrundeliegender Stand der Technik

Ein großer Teil der schüttfähigen Nahrungs- und Futtermittel wird in Säcken transportiert und wenigstens vorübergehend darin gelagert. Im Gegensatz zum Lose-Transport bietet der Sack den Vorteil der Disponierung für den einzelnen Abnehmer. Jede beliebige Teilmenge, die durch ein Normsackgewicht teilbar ist, kann über ein Transportsystem den einzelnen Verbrauchern zugeführt werden. Der Nachteil des sackweisen Transportes von Schüttgut liegt im Aufwand für die Füllung und Verwägung, die für jeden einzelnen Sack mit hoher Geschwindigkeit erfolgen soll. Als Folge der zur Zeit laufenden Automatisierung ist die beteiligte Fachwelt bestrebt, die Absackung so rationell wie möglich, besonders aber auch so schnell wie möglich durchzuführen. Es liegt auf der Hand, daß dabei mehrere entgegengesetzte Sachverhalte in einem System vereinigt werden müssen. Im Vordergrund sind z.B. die drei Kriterien Schnelligkeit, Genauigkeit und Investitionsaufwand für die ganze Absackeinrichtung.

Im Interesse der Öffentlichkeit werden die Waagenvorrichtungen regelmäßig überprüft, damit sie von den Eichanforderungen nicht abweichen.

Für die Absackung von Nahrungs- und Futtermitteln sind zwei Systeme vorherrschend. Bei der Schneckenspeisung wird für größere industrielle Anlagen zur optimalen Ausnützung des ganzen Absack- und Verwägemechanismus ein Grob- und ein Feinstrom gebildet, über eine entsprechend große bzw. eine kleine Schnecke. Durch gesteuertes Zu- und Abschalten der beiden Schnecken kann mit großer Leistung der Waagenbehälter annähernd gefüllt werden, um dann die genaue Dosierphase mit der kleinen Dosierschnecke zu beenden.

Schneckenspeisungen können dort verwendet werden, wo eine verhältnismäßig große Konstanz in den Schüttguteigenschaften gegeben ist, z.B. bei der Absackung von Futter- oder Brotmehl. In Mehlmühlen trifft man vorwiegend Schneckenspeisungen für die Dosierung der Waagen an. Im Bereich der Futtermühlen ist eine viel größere Vielfalt an Produkten üblich: Futterwürfel, Futterflocken, Futterkleie und Futtermehl, teils mineralische Komponenten usw.

Aber heikle, besonders brüchige Produkte wie Flocken dürfen nicht mit mechanischen Schneckenförderern transportiert werden. Für diese Produktklassen sind vorwiegend Dosierbänder im Einsatz. Ein Dosierband bedingt naturgemäß einen verhältnismäßig großen baulichen Aufwand gegenüber der Förderschnecke.

Allein aus Preisgründen kommt die Verwendung eines großen und eines kleinen Dosierbandes nicht in Betracht. Da die Flocken und Futterwürfel teils recht große äußere Abmessungen aufweisen, ist auch rein physikalisch eine Miniaturisierung problematisch. Eine Feindosierung mit einem Dosierband könnte zumindest nicht durch Verkleinerung des Dosierbandes allein erzielt werden. Beim Dosierband behilft man sich für genaue Dosierleistungen mit einstellbaren Bandgeschwindigkeiten, teils kombiniert mit einstellbaren Schichtdicken auf dem Band mit hierauf abgestimmten Verschlußelementen.

Wegen des sogenannten Vorlaufes und des Nachlaufes - bei mechanischen Waagen zudem noch der notwendigen Beruhigungszeit - läßt sich die Absackung nur bis zu einer "natürlichen" oberen Grenze steigern. Diese Grenze lag bisher für eine einzelne Bandspeisung bei ca. 400 Säcken pro Stunde. Wird eine größere Sackzahl pro Stunde verlangt, so müssen entsprechend viele Absackeinheiten aufgebaut werden. Rechnet man einen Sack zu 50 kg, so können bei 400 Säcken pro Stunde 3 bis 4 Lastwagen beladen werden. Wenn auch diese Leistung beachtlich ist, so tritt doch eine unbefriedigende Situation auf, da der Transportzyklus in sehr vielen Unternehmen frühmorgens um dieselbe Zeit beginnt. Die Wartezeit muß für jeden Lastwagen aber auf ein Minimum reduziert werden, was zu eigentlichen Stoßbelastungen für die Beladung führt.

Offenbarung der Erfindung

Ausgehend hiervon besteht die der Erfindung zugrundeliegende Aufgabe darin, ein Verfahren der eingangs genannten Art so zu verbessern, daß auch ohne Einsatz einer Speiseschneckenzuführung eine wesentliche Steigerung der Absackleistung, etwa auf 600 bis 800 Säcke pro Stunde, mit unveränderter Dosiergenauigkeit ermöglicht wird, wobei aber der Dosiertransport ebenso produktschonend wie bei bekannten Dosierband-Führungen erfolgen soll.

Erfindungsgemäß wird dies bei einem Verfahren der eingangs genannten Art dadurch erreicht, daß die Zubringmenge des Dosierbandes in einen Hauptdosierstrom sowie einen Feindosierstrom aufgeteilt wird und daß der Hauptdosierstrom unabhängig vom Feindosierstrom in einen Auffangbehälter einleitbar ist, in dem das entsprechende Schüttgut gespeichert und von dem aus es beim nächsten Wägevorgang dem Hauptdosierstrom wieder zugeführt wird.

Die Erfindung ermöglicht es, mit einfachsten Mitteln durch kombinatorisches Zusammenwirken die zugrundeliegende Aufgabe sehr vorteilhaft zu lösen. Das Dosierband bringt im Normalfall eine konstante Leistung: durch das Aufteilen der Zubringmenge des Bandes in einen Hauptdosierstrom sowie in einen Feindosierstrom läßt sich die Dosierfunktion nach optimalen Kriterien auslegen. Gleichzeitig kann die Zubringmenge während der Phase der Grobdosierung auf ein Maximum eingestellt sein. Die wesentliche Impulsänderung (Stoppen des Produkteinfalls in den Waagenbehälter) nach Beendigung der Grobdosierung wirkt sich in der Phase der Feindosierung aus, so daß bereits die Feindosierung zur Beruhigung der Waage ausgenützt werden kann. Durch kurzzeitiges Stauen bzw. Zwischenspeichern des Grobstromes in der Phase der Feindosierung kann das Band (zumindest theoretisch) während der ganzen Dauer der Verwägung mit Maximalleistung fahren. Bei Wiederbeginn eines neuen Wägezyklusses wird die gestaute Menge direkt in den Waagenbehälter geschüttet. Damit fällt ersichtlich die bisherige "natürliche" obere Grenze für eine Leistungssteigerung fort. Schon mit einer ersten Versuchsmechanik konnten problemlos 600 Säcke in der Stunde gefüllt werden. Dabei zeigte sich, daß eine weitere Leistungssteigerung nicht mehr unmittelbar von den erfindungsgemäß eingesetzten Elementen Band, Dosiereinrichtung sowie Waagenbehälter mit Steuerung abhängt, sondern vielmehr von den diesen nachgeschalteten Elementen, wie z.B. der Absakkung selbst und dem Weitertransport.

In vorteilhafter Ausgestaltung des erfindungsgemäßen Wägeverfahrens wird die Dosierphase in drei Abschnitten durchgeführt, bei deren erstem dem Hauptdosierstrom das im Auffangbehälter gespeicherte, vom vorherigen Wägezyklus stammende Schüttgut zusätzlich zugeführt wird, bei deren zweitem allein der Hauptdosierstrom und der Feindosierstrom fließen, und bei deren drittem allein der Feindosierstrom dem Waagenbehälter zugeführt wird, wobei der zweite und dritte Abschnitt jeweils so lange ausgedehnt werden, bis die Schwingungen des Waagenbehälters infolge der vorangegangenen Dosierleistungsreduzierung ausgeglichen sind. Natürlich fällt bei der ersten Phase der Stau aus "der vorangegangenen Dosierleistungsreduzierung" fort, dagegen gewinnt man die Stauleistung bei jedem folgenden Verwägezyklus als Mengen- bzw. Zeitgewinn für die Verkürzung der Dosierphase.

Im Gegensatz zur Präzisionslaborwaage wird bei industriellen Durchlaufwaagen für die Feststellung des genauen Gewichtes nicht eine vollständige Beruhigung des Waagespieles abgewartet, da dies eine zu große Zeitspanne beanspruchen würde. In der Praxis wartet man vielmehr nur zwischen ein und drei Sekunden ab, bis der positive und negative Ausschlag der Waage genau gleich sind, und dann stellt man das genaue Gewicht fest. Mit der bewußten Überschneidung der Vorgänge der drei zeitlichen Abschnitte kann die Waage mit Bandspeisung, insbesondere zeitlich, auf optimale Weise genutzt werden, ohne daß auf die Vorteile, die eine bandgespeiste Waage bietet, verzichtet werden müßte.

In weiterer vorteilhafter Ausgestaltung des erfindungsgemäßen Verfahrens wird zur Veränderung der Zubringmenge des Dosierbandes dessen Bandgeschwindigkeit geregelt und dies vorzugsweise in zwei oder drei Stufen. Besonders vorteilhaft ist es, wenn in Kombination hierzu die Höhe der Produktschicht auf dem Dosierband zur Veränderung der Zubringmenge einstellbar ist.

Die Bandgeschwindigkeit wird dabei bevorzugt nach dem jeweiligen Dosierzylkus gesteuert: bei der Grobdosierung wird somit eine hohe Bandgeschwindigkeit gewählt, während bei der Feindosierung eine kleinere Bandgeschwindigkeit, etwa im Verhältnis 3 : 2 oder 3 : 1 ausreicht. Hierdurch wird nicht nur eine noch genauere Feindosierung erreicht, sondern es kann auch der Auffangbehälter noch etwas kleiner dimensioniert werden, da die Zubringmenge für die Zwischenspeicherung im gleichen Verhältnis verkleinert wird. Diese Verhältnisse können selbstverständlich den jeweiligen Anforderungen angepaßt werden. Erfahrungsgemäß hat die Bandgeschwindigkeitsänderung keinen unmittelbar negativen Einfluß auf eine mögliche Bruchgefahr des Gutes.

Eine eindrucksvolle weitere Verbesserung erhält man, wenn die Schichthöhe·im Hinblick auf das Schüttgewicht sowie andere produktspezifische Eigenschaften eingestellt wird. Eine stufenlos einstellbare Schichtdicke bringt den besonderen Vorteil einer optimalen Ausnützung der Anlage ohne unnötige Sicherheitsmargen. Der Waagenbehälter kann für jedes Produkt optimal gefüllt werden, ohne daß der eigentliche Verwägezyklus nachteilig beeinflußt wird.

Bevorzugt wird die Zubringmenge im Bereich des freien Abwurfes des Dosierbandes in den Hauptdosierstrom sowie in den Feindosierstrom aufgeteilt. Die Bandspeisung kann dadurch als nahezu zwanglose Speisung betrachtet werden, zumindest wenn der Übergang von einem vorangehenden Vorratsbehälter auf das Band gut gelöst wird. Die Produktspeisung, d.h. die steuerbaren Größen des Dosierbandes werden vom eigentlichen Wägevorgang gesteuert. Dadurch, daß der Hauptdosierstrom und der Feindosierstrom hinter dem freien Abwurf gebildet werden, kann die Produktstromaufteilung ohne Kraftaufwendung durchgeführt werden. Eine Beschädigung oder nachteilige Beeinflussung des Produktes oder der Anlageteile ist dabei nicht gegeben.

Besonders vorteilhaft ist es, wenn der Feindosierstrom aus dem mittleren Bereich des Dosierbandes abgezweigt wird, und, weiterhin, wenn der Feindosierstrom unterbrechbar und in einer eigenen Auffangeinrichtung zwischenspeicherbar ist. Die Abzweigung des Feindosierstromes aus dem mittleren Bereich des Dosierbandes läßt sowohl zeitlich wie auch mengenmäßig besonders gleichmäßige Resultate erzielen. Beim Erreichen des Sollgewichtes wird bevorzugt der Feindosierstrom räumlich unmittelbar vor der Waage gestoppt und, während das Dosierband noch einige Zeit weiterläuft, in der genannten weiteren eigenen Auffangeinrichtung zwischengespeichert.

Im Hinblick auf einen weiteren stabilisierenden Einfluß auf den Wägevorgang ist es vorteilhaft, wenn sowohl der Feindosierstrom wie der Grobdosierstrom im Bereich vor der Auffangvorrichtung zu ihrer Vergleichmäßigung über eine schräge Fläche geleitet und dabei "verstrichen" werden. Bevorzugt werden sowohl der zeitliche Ablauf der Dosierabschnitte wie auch die anderen leistungsbestimmenden Einflußgrößen von einer Waagensteuerung aus angesteuert.

Das erfindungsgemäße Verfahren erlaubt eine rationelle industrielle Verwägung einer besonders großen Anzahl von Produkten bei hoher Abfüllgeschwindigkeit. Seine besonderen Vorteile ergeben sich auch bei einer allgemeineren Betrachtung des Wägevorgangs als solchem:

Der Wägevorgang läßt sich nicht nur als eine bloße Aneinanderreihung von an sich statistischen Ereignissen betrachten. Tatsächlich ist vielmehr die Verwägung ein dynamischer Vorgang, da sich während des vollständigen Waagezyklusses nahezu alles laufend bewegt. Dauert der ganze Wägezyklus z.B. sechs Sekunden, so werden allein etwa drei Sekunden für die Phase der Feindosierung benötigt, um das dynamische Spiel der Waage mit dem Impuls der Feindosierung in ein Gleichgewicht zu bringen, d.h. um den störenden Impuls aus der Beendigung der Grobdosierung zu dämpfen. Für die Grobdosierung bleiben bei diesem Beispiel somit nur etwa zwei bis drei Sekunden; zieht man nun das Ablassen des Staues aus einem vorangegangenen Zyklus hiervon noch ab, so verbleibt dann nur noch eine restliche Zeitspanne von ein bis zwei Sekunden.

Die Erfindung bezieht sich ferner auf eine Verwägevorrichtung mit einem Dosierband, einer von der Waage steuerbaren Absperreinrichtung sowie einem Waagenbehälter. Erfindungsgemäß ist dabei vorgesehen, daß im Bereich des Abwurfes des Dosierbandes eine verschließbare Auffangeinrichtung für den Hauptdosierstrom sowie eine Einrichtung zur Bildung eines steuerbaren, vom Hauptdosierstrom trennbaren Feinstromes angeordnet ist.

Bei der erfindungsgemäßen Verwägevorrichtung läßt sich analog auf die weiter oben bereits geschilderten Vorteile des erfindungsgemäßen Verfahrens verweisen.

In einer bevorzugten Ausführungsform weist die erfindungsgemäße Verwägevorrichtung als Einrichtung zur Ausbildung eines Feindosierstromes eine verschließbare Auffangeinrichtung auf, mittels derer der Hauptdosierstrom aufgefangen und seine Weiterleitung an die Waage verhindert wird.

Eine weitere vorteilhafte Ausgestaltung der erfindungsgemäßen Verwägevorrichtung besteht auch darin, daß die Einrichtung zur Ausbildung eines Feindosierstromes mit einem oberen, einstellbaren Auffangtrichter versehen ist. Vorzugsweise greift dieser Auffangtrichter unmittelbar in den Bereich der Abwurfzone des Bandes ein. Mit der Einstellbarkeit des Auffangtrichters kann das Verhältnis der Menge des Feindosierstromes zur Menge des Grobdosierstromes für das jeweils eingesetzte Produkt voreingestellt werden. Die Einstellung des Auffangtrichters ist wesentlich für die erste Inbetriebsetzung der Gesamtvorrichtung. In den Fällen, in denen ein Verwiegen nicht Eichvorschriften unterliegt, kann aber, je nach den Umständen, der Feindosierstrom durchaus als relativ größerer Anteil im Verhältnis zur Gesamtmenge als im Falle der Beachtung bestimmter Eichvorschriften eingestellt werden. Zweckmäßigerweise wird die Einrichtung zur Ausbildung eines Feindosierstromes zumindest teilweise innerhalb des Auffangbehälters für den Hauptdosierstrom angeordnet.

Es ist weiterhin von Vorteil, wenn für das Dosierband eine Einrichtung zur Änderung der Bandgeschwindigkeit vorgesehen ist, und, weiterhin, wenn dem Dosierband ein einstellbarer Abstreifer zur Fernsteuerung der Schichtdicke des Schüttgutes auf dem Dosierband zugeordnet ist. Bevorzugt wird dem Dosierband weiterhin zur Vorwahl der Schichtbreite des Schüttgutes auf dem Dosierband eine einstellbare Stauklappe zugeordnet.

Es ist weiterhin von Vorteil, wenn bei einer erfindungsgemäßen Verwägevorrichtung automatische Steuermittel vorgesehen sind, die direkt die Absperrvorrichtungen und die Geschwindigkeit des Dosierbandes steuern. Vorzugsweise ist eine Fernsteuerung für den Abstreifer vorgesehen, die, wiederum vorzugsweise, für eine stufenlose Verstellung des Abstreifers eingerichtet ist. Durch solche Steuermittel läßt sich insbesondere eine einfache und rasche Korrektur des Einflusses von variablen Schüttgewichten erzielen, was besonders vorteilhafterweise in Verbindung mit einer stufenlosen Einstellung des Abstreifers gilt.

Insbesondere dann, wenn die Waage als elektronische Waage ausgebildet ist, treten die Vorteile der Erfindung besonders gut zutage, wenn nämlich die elektronischen Steuermittel der Waage dann etwa direkt die einzelnen Variablen (also z.B. die Absperreinrichtungen einerseits sowie die Bandgeschwindigkeit andererseits) steuern. Ohne nennenswerte Stockung oder Störung im Produktfluß können dann bei der Speisung der Waage die einzelnen Waagezyklen genau und mit hoher Geschwindigkeit ausgeführt werden. Die Schichthöheneinstellung erfolgt vor jedem Produktwechsel einmalig, kann aber nach Bedarf unschwer korrigiert werden. Alle genannten Vorgänge lassen sich leicht durch geeignete Rechner koordinieren, so der Dosiervorgang in Abhängigkeit vom Verwiegevorgang oder die Schichthöheneinstellung in Abhängigkeit von den Produkteigenschaften.

Die Erfindung ermöglicht es, auf einem überraschend einfachen und doch "eleganten" Weg eine den physikalischen Gegebenheiten besonders gut angepaßte Automatisierung des Gesamtvorgangs zu erreichen.

Kurze Beschreibung der Zeichnungen

Die Erfindung wird nachfolgend anhand der Zeichnung beispielshalber und im Prinzip noch näher erläutert. Es zeigen:

Figur 1    den schematischen Aufbau einer erfindungsgemäßen Verwägevorrichtung;

Figur 2    die perspektivische Darstellung von Waagebehälter und Dosiereinrichtung bei einer erfindungsgemäßen Verwägevorrichtung;

Figur 3    (in vergrößertem Maßstab) eine Dosiereinrichtung bei einer erfindungsgemäßen Verwägevorrichtung;

Figur 4    den graphischen Verlauf der Produktleistung über der Zeit bei einer erfindungsgemäßen Verwägevorrichtung bzw. bei Einsatz eines erfindungsgemäßen Verfahrens, und

Figur 5    den graphischen Verlauf der Geschwindigkeit des Dosierbandes über der Zeit bei einer erfindungsgemäßen Verwägevorrichtung bzw. einem erfindungsgemäßen Verfahren.

Ausführliche Beschreibung der Zeichnungen

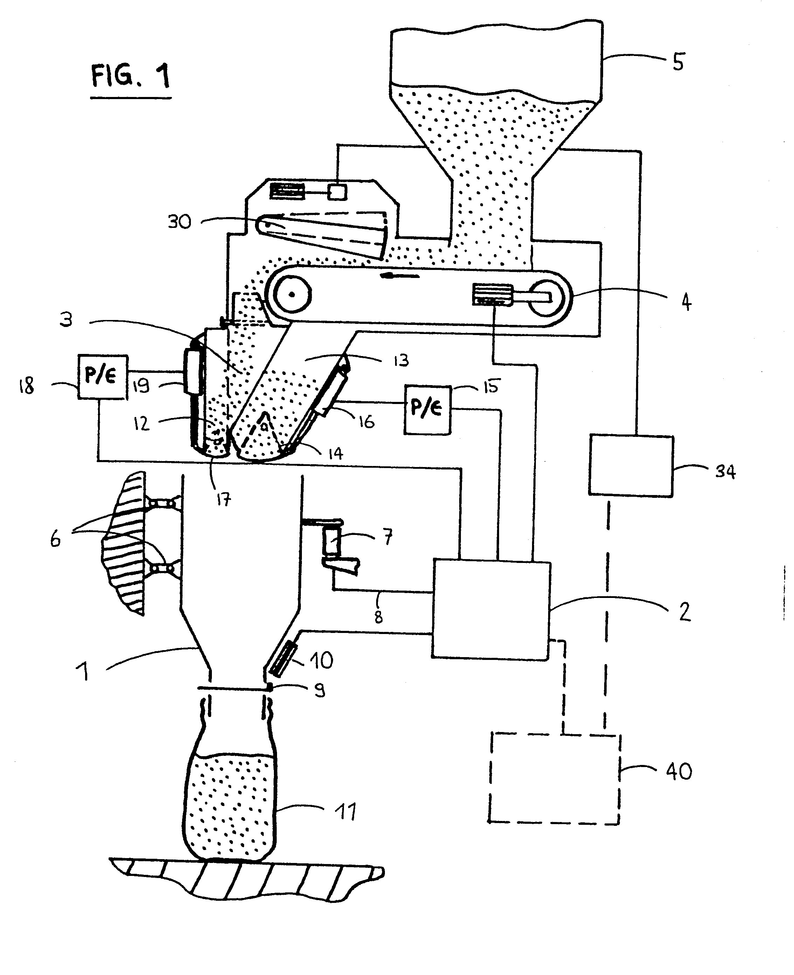

Die Verwägevorrichtung besteht, wie in Figur 1 dargestellt ist, im wesentlichen aus einem Waagenbehälter 1, einer Waagensteuerung 2, einer Auffangvorrichtung 3, einem Dosierband 4 sowie einem Vorbehälter 5, wobei in der Figur der Waagenbehälter 1 nur sehr schematisch dargestellt ist. Er wird auf seiner linken Seite von einer Viergelenkstütze 6 gehalten, durch welche die hier auftretende horizontale Kraftkomponente aufgenommen wird. Rechts am Waagenbehälter 1 ist eine Kraftmeßdose 7 angebracht, welche die senkrechte Kraftkomponente, also insbesondere das Gewicht des Waagenbehälters 1, feststellt und an die Waagensteuerung über eine entsprechende Leitung 8 meldet.

Der Waagenbehälter 1 weist unten einen Abschlußschieber 9 auf, der über einen pneumatischen Zylinder 10 durch die Waagensteuerung 2 betätigbar ist. Unter dem Waagenbehälter 1 ist ein Sack 11 dargestellt, der eine automatische Absackeinrichtung symbolisieren soll. Die Auffangeinrichtung 3 ist durch zwei getrennte Einheiten gebildet, nämlich eine Feinstrom-Auffangeinrichtung 12 sowie einen Grobstrom-Auffangbehälter 13. Der Grobstrom-Auffangbehälter 13 weist eine Absperreinrichtung 14 mit elektropneumatischem Ventil 15 sowie einem pneumatischen Zylinder 16 auf. Entsprechend ist die Feinstrom-Auffangeinrichtung mit einer Absperreinrichtung 17 sowie einem elektropneumatischen Ventil 18 und einem pneumatischen Zylinder 19 ausgerüstet.

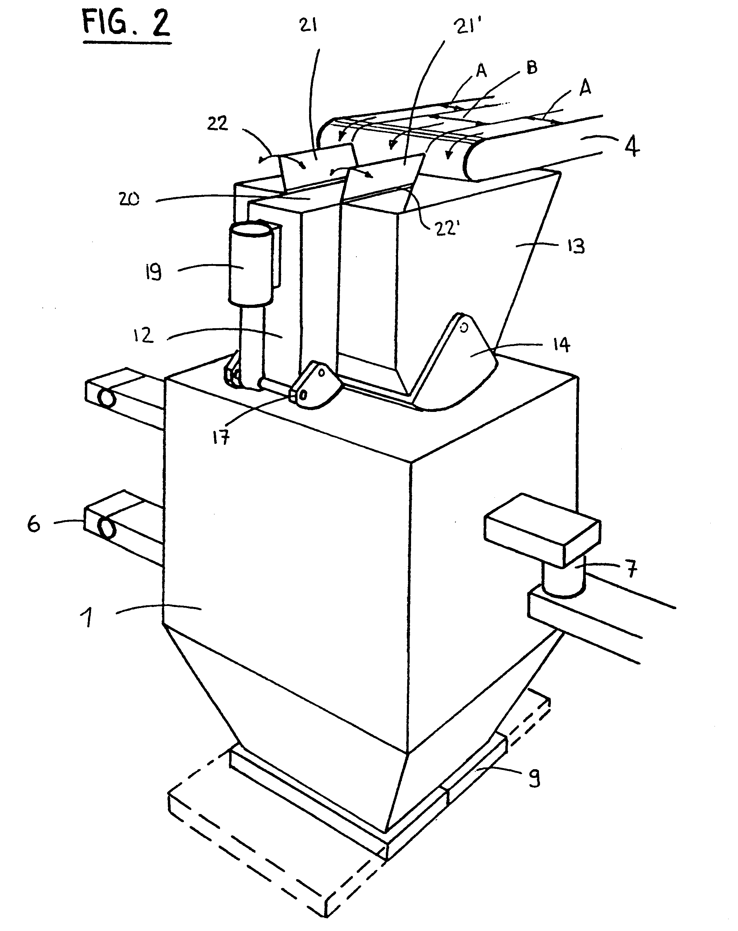

In Figur 2 ist die Zuordnung der beiden Auffangeinrichtungen 12 und 13 zum Waagenbehälter 1 bzw. zum Dosierband 4 perspektivisch dargestellt (wobei die wesentlichen Bezugszeichen aus Figur 1 auch in Figur 2 übernommen sind).

Zum Zwecke der Verdeutlichung sind in Figur 2 die Abwurfzonen A für die Grobstromdosierung und die Abwurfzone B für die Feinstromdosierung etwas übertrieben zugunsten der Feinstromdosierung eingezeichnet. Ein Auffangtrichter 20 weist zwei einstellbare Klappen 21 und 21' auf, die (wie mit Pfeilen 22 angedeutet) um Achsen 22' in öffnendem oder schliessendem Sinne bewegt werden können, wodurch eine entsprechende Veränderung des Verhältnisses der Zonen A und B zueinander eintritt. Wie bereits weiter oben ausgeführt, wird üblicherweise die relative Größe der beiden Zonen nur einmalig bei Inbetriebsetzung eingestellt, wonach eine unerwünschte Verstellung durch das Montagepersonal (über hier nicht dargestellte Mittel) verhindert wird.

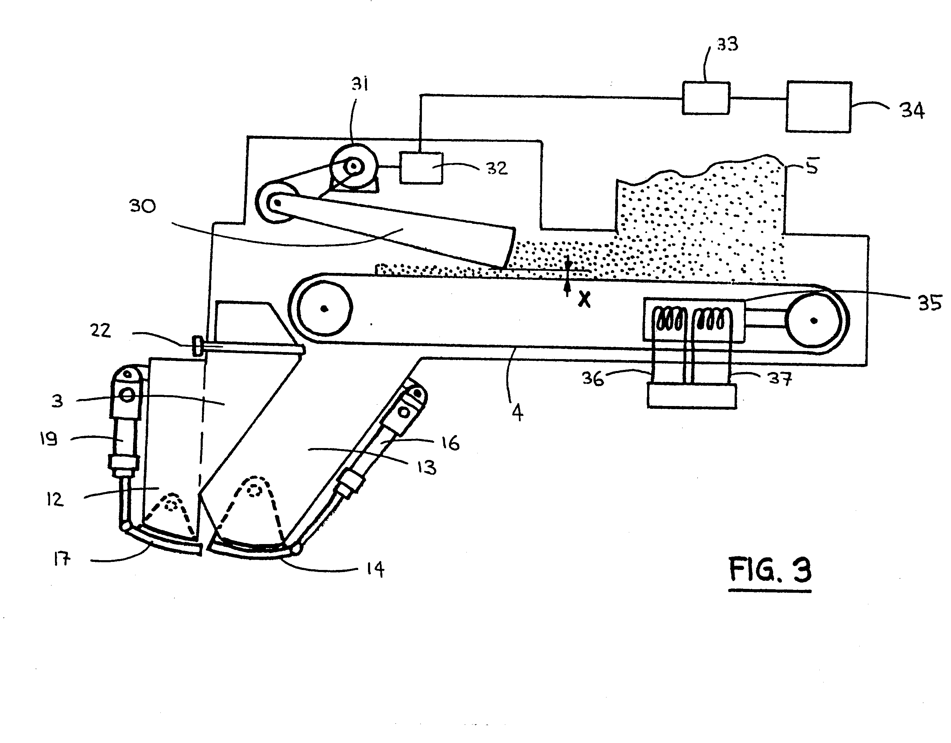

In Figur 3 ist ein Abstreifer 30 sowie der entsprechende mechanische Aufbau der Dosiereinrichtung in größerem Maßstab gezeigt. Der Abstreifer 30 wird durch einen elektromotorischen Antrieb 31 eingestellt: zwei handelsübliche Drehkondensatoren 32 und 33 erlauben dabei durch elektrische Abstimmung über ein Fernbedienungsgerät 34 genau reproduzierbare Einstellungen. Wesentlich ist hierbei das absolute Maß "X" der Schichtdicke, die primär die Variationen des Produktschüttgewichtes kompensieren soll. In Figur 3 ist ferner ein Getriebemotor 35 mit je einer Wicklung 36 bzw. 37 für eine niedrige bzw. eine hohe Drehzahl dargestellt. Für denselben Zweck könnte aber auch ein stufenlos einstellbarer Motor vorgesehen werden. Die geschilderte Kombination von mechanischen wie elektronischen Steuermitteln erweist sich bei der gezeigten Vorrichtung als besonders vorteilhaft.

Wie aus Figur 1 ersichtlich ist, kann der Verwiegezyklus durch die Waagensteuerung 2 (als zeitlicher Zyklus: Grobstromdosierung/Feinstromdosierung/Beruhigungsphase für die Waage) sowie in der Zuordnung von großer zu kleiner Bandgeschwindigkeit festgelegt werden. Sowohl die Waagensteuerung 2 wie das Fernbedienungsgerät 34 können im Falle einer vollautomatischen Absackung an einen zentralen Rechner 40 angeschlossen werden, der sich auf die vorprogrammierte Waagensteuerung sowie entsprechend zu erfassende Erfahrungswerte für die Einstellung des Abstreifers 30 abstützt und die weiteren Anlageelemente entsprechend steuert.

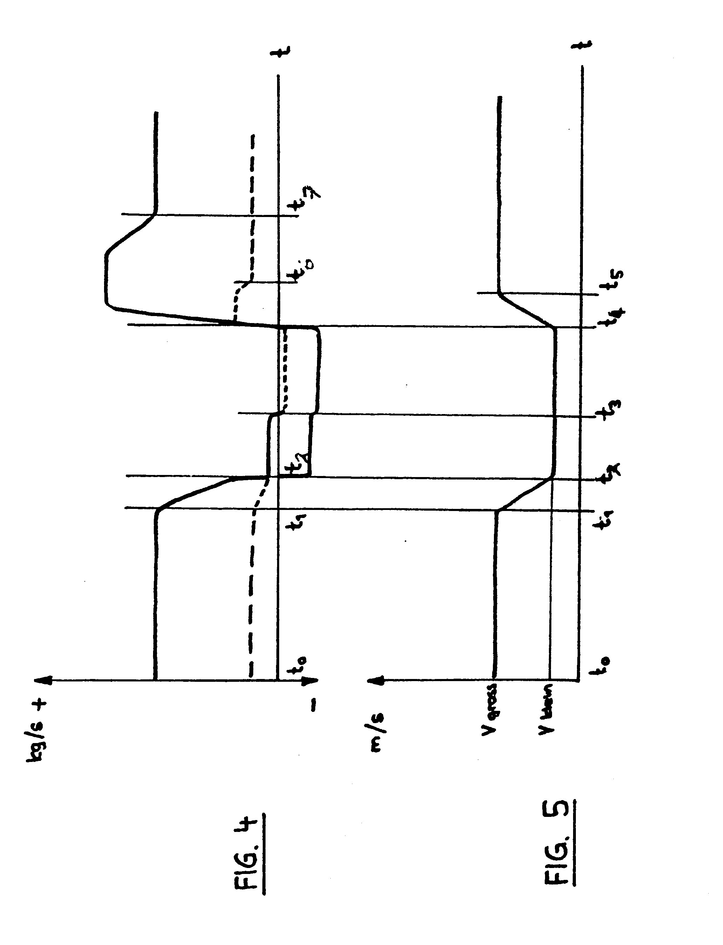

Der prinzipielle Vorgang des Verwiegemechanismusses läßt sich aus Figur 4 und Figur 5 diagrammatisch entnehmen:

In Figur 4 ist die Dosierleistung des Dosierbandes 4 in kg/sec positiv (+) und die Zwischenspeicherung in dem jeweiligen Auffangbehälter negativ (-) über der Zeitachse (t) dargestellt (der Vollstrich zeigt dabei die Verhältnisse beim Grobdosierstrom, während die gestrichelte Linie für den Feindosierstrom gilt).

In Figur 5 ist die Bandgeschwindigkeit über demselben zeitlichen Ablauf (t) dargestellt.

Der Zeitpunkt $t_0$ ist beliebig im Verwägezyklus gewählt. Zum Zeitpunkt $t_1$ wird die Bandgeschwindigkeit vom Wert $V_{groß}$ auf $V_{klein}$ abgesenkt. Entsprechend reduzieren sich die beiden Dosierleistungen (nämlich Haupt- und Feindosierstrom), z.B. auf ein Drittel der jeweils vollen Leistung. Zum Zeitpunkt $t_2$ wird die Absperreinrichtung 14 geschlossen. Die entsprechende Produktleistung der Grobstromdosierung wird nun bis zum Zeitpunkt $t_4$ in dem Hauptdosierstrom-Auffangbehälter 13 zwischengespeichert. Vom Zeitpunkt $t_2$ bis zum Zeitpunkt $t_3$ arbeitet lediglich die Feinstromdosierung, auch hier wegen der reduzierten Bandgeschwindigkeit mit sehr kleiner Leistung. Zum Zeitpunkt $t_3$ ist das Soll-Gewicht erreicht und die Absperrvorrichtung 17 für den Feindosierstrom schließt ebenfalls. Auch die Produktleistung der Feinstromdosierung wird von nun an bis zum Zeitpunkt $t_4$ in der Feinstrom-Auffangeinrichtung 12 zwischengelagert. Nach Abschluß des Verwiegezyklusses zum Zeitpunkt $t_4$ werden die beiden Absperreinrichtungen 14 bzw. 17 wieder geöffnet und die Bandgeschwindigkeit wieder auf ihren großen Wert erhöht. Die Produktspeisung in den Waagenbehälter erreicht bei Beginn eines neuen Wägezyklusses wieder ein Maximum, da zur vollen Transportleistung des Bandes, etwa zum Zeitpunkt $t_5$ (wo die Bandgeschwindigkeit wieder vom Wert $V_{klein}$ auf $V_{groß}$ angewachsen ist) noch die zwischengespeicherte Schüttmenge hinzukommt und in den Waagenbehälter mit abgelassen wird. Durch ein Verriegeln bzw. Abschalten des Waagenmechanismusses kann hier ein störender Einfluß auf die empfindlichen Teile der Waage vermieden werden. Zum Zeitpunkt $t_6$ setzt die Feinstromdosierung und zum Zeitpunkt $t_7$ die Hauptstromdosierung wieder auf normalem Leistungsniveau ein.

Es ist selbstverständlich, daß neben dem beschriebenen Ausführungsbeispiel eine fast beliebige Variation der einzelnen Steuergrößen möglich ist. Ebenso müssen in der Praxis eine Vielzahl von Störgrößen, so z.B. die Verzögerungen bei den Übergängen von einem Zustand in den anderen u.ä., berücksichtigt werden, was jedoch über die Waagensteuerung erfaßt bzw. korrigiert werden kann.

Bei den graphischen Darstellungen der Figur 4 und Figur 5 handelt es sich um ideale, sehr vereinfacht dargestellte Verläufe, in denen etwa die Überschwingungen bei Impulsänderungen auf der Zufuhrseite o.ä. nicht dargestellt sind.

Patentansprüche

1.    Verfahren zum Verwägen von Schüttgut, wobei das Schüttgut einem Waagebehälter (1) über ein Dosierband (4) zugeführt wird, dadurch  g e k e n n z e i c h n e t , daß die Zubringmenge des Dosierbandes (4) in einen Hauptdosierstrom sowie einen Feindosierstrom aufgeteilt wird, und daß der Hauptdosierstrom unabhängig vom Feindosierstrom in einen Auffangbehälter (13) einleitbar ist, in welchem das entsprechende Schüttgut gespeichert und von dem aus es beim nächsten Wägevorgang dem Hauptdosierstrom wieder zugeführt wird.

2.    Verfahren nach Anspruch 1, dadurch gekennzeichnet, daß die Dosierphase in drei Abschnitten durchgeführt wird, bei deren erstem dem Hauptdosierstrom das im Auffangbehälter (13) gespeicherte, vom vorherigen Wägezyklus stammende Schüttgut zusätzlich zugeführt wird, bei deren zweitem allein der Hauptdosierstrom und der Feindosierstrom fließen, und bei deren drittem allein der Feindosierstrom dem Waagenbehälter (1) zugeführt wird, wobei der zweite und dritte Abschnitt jeweils so lange ausgedehnt werden, bis die Schwingungen des Waagenbehälters (1) infolge der vorangegangenen Dosierleistungsreduzierung ausgeglichen sind.

3.    Verfahren nach Anspruch 1 oder 2, dadurch gekennzeichnet, daß zur Veränderung der Zubringmenge des Dosierbandes (4) dessen Bandgeschwindigkeit, vorzugsweise in zwei oder drei Stufen geregelt wird.

4.    Verfahren nach einem der Ansprüche 1 bis 3, dadurch gekennzeichnet, daß die Höhe der Produktschicht auf dem Dosierband (4) zur Veränderung der Zubringmenge einstellbar ist.

5.    Verfahren nach einem der Ansprüche 1 bis 4, dadurch gekennzeichnet, daß die Zubringmenge im Bereich des freien Abwurfes des Dosierbandes (4) in Haupt- und Feindosierstrom aufgeteilt wird.

6. Verfahren nach Anspruch 5, dadurch gekennzeichnet, daß der Feindosierstrom aus dem mittleren Bereich des Dosierbandes (4) abgezweigt wird.

7. Verfahren nach einem der Ansprüche 1 bis 6, dadurch gekennzeichnet, daß auch der Feindosierstrom unterbrechbar und in einer Auffangeinrichtung (12) zwischenspeicherbar ist.

8. Verfahren nach einem der Ansprüche 1 bis 7, dadurch gekennzeichnet, daß sowohl der Feindosierstrom wie der Hauptdosierstrom im Bereich vor der Auffangvorrichtung (12; 13) zu ihrer Vergleichmäßigung über eine schräge Fläche geleitet werden.

9. Verfahren nach einem der Ansprüche 2 bis 8, dadurch gekennzeichnet, daß sowohl der zeitliche Ablauf der Dosierabschnitte wie die Einstellung anderer leistungsbestimmender Einflußgrößen von einer Waagensteuerung (2) gesteuert werden.

10. Verwägevorrichtung mit einem Dosierband (4), einer von der Waage steuerbaren Absperreinrichtung sowie einem Waagenbehälter (1), insbesondere zur Durchführung eines Verfahrens nach einem der Ansprüche 1 bis 9, dadurch gekennzeichnet, daß im Bereich des Abwurfes des Dosierbandes (4) eine verschließbare Auffangeinrichtung (13) für den Hauptdosierstrom sowie eine Einrichtung (12) zur Bildung eines steuerbaren, vom Hauptdosierstrom trennbaren Feindosierstromes angeordnet ist.

11. Verwägevorrichtung nach Anspruch 10, dadurch gekennzeichnet, daß die Einrichtung zur Ausbildung eines Feindosierstromes eine verschließbare Auffangeinrichtung (12) aufweist.

12. Verwägevorrichtung nach Anspruch 11, dadurch gekennzeichnet, daß die Einrichtung zur Ausbildung eines Feindosierstromes mit einem oberen, einstellbaren Auffangtrichter (20,21,21') versehen ist.

13. Verwägevorrichtung nach einem der Ansprüche 10 bis 12, dadurch gekennzeichnet, daß die Einrichtung zur Ausbildung eines Feindosierstromes zumindest teilweise innerhalb der Auffangeinrichtung (13) für den Hauptdosierstrom angeordnet ist.

14. Verwägevorrichtung nach einem der Ansprüche 10 bis 13, dadurch gekennzeichnet, daß für das Dosierband (4) eine Einrichtung zur Änderung der Bandgeschwindigkeit vorgesehen ist.

15. Verwägevorrichtung nach einem der Ansprüche 10 bis 14, dadurch gekennzeichnet, daß dem Dosierband (4) ein einstellbarer Abstreifer (30) zur Fernsteuerung der Schichtdicke (X) des Schüttgutes auf dem Dosierband (4) zugeordnet ist.

16. Verwägevorrichtung nach einem der Ansprüche 10 bis 15, dadurch gekennzeichnet, daß dem Dosierband (4) zur Vorwahl der Schichtbreite des Schüttgutes auf dem Dosierband (4) eine einstellbare Stauklappe zugeordnet ist.

17. Verwägevorrichtung nach Anspruch 10, dadurch gekennzeichnet, daß automatische Steuermittel (2) vorgesehen sind, die direkt die Absperrvorrichtungen (14;17) und die Geschwindigkeit des Dosierbandes (4) steuern.

18.   Verwägevorrichtung nach Anspruch 15, dadurch gekennzeichnet, daß eine Fernsteuerung (33,34) für den Abstreifer (30) vorgesehen ist.

19.   Verwägevorrichtung nach Anspruch 18, dadurch gekennzeichnet, daß die Fernsteuerung (33,34) für eine stufenlose Verstellung des Abstreifers (30) eingerichtet ist.

FIG. 1

0095095

1/4

FIG. 2

**FIG. 3**

FIG. 4

FIG. 5

0095095

**0095095**
Nummer der Anmeldung

EP  83 10 4677

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-1 774 348   (DYNAMIT NOBEL AG) <br> * Anspruch 1 * | 1,2,10 | G 01 G   13/08 <br> G 01 G   13/02 |
| Y | DE-B-1 274 807   (CHRONOS-WERK REUTHER & REISERT K.G.) <br><br> * Ansprüche 1-5 * | 1-4,9, 10,14, 15,17- 19 | |
| A | US-A-4 010 809   (J. HOBART) | | |
| A | US-A-3 700 054   (McCLUSKY) | | |
| A | DE-B-1 291 526   (CHRONOSWERK REUTHER & REICHERT K.G.) | | |
| A | DE-C-  580 802   (FR. HESSER MASCHINENFABRIK A.G.) | | |

--- 

**RECHERCHIERTE SACHGEBIETE (Int. Cl. ³)**

G 01 G

Der vorliegende Recherchenbericht wurde für alle Patentansprüche erstellt.

| Recherchenort | Abschlußdatum der Recherche | Prüfer |
|---|---|---|
| DEN HAAG | 30-08-1983 | VITZTHUM N.A. |